# EUROPEAN PATENT SPECIFICATION

(11) **EP 4 309 161 B1**
(45) Date of publication and mention of the grant of the patent: **12.11.2025**
(21) Application number: 22715176.8
(22) Date of filing: 18.03.2022
(51) Int. Cl.: G08C 17/02, H04Q 9/00, G06Q 10/08

(54) **REMOTE CONTROL SYSTEM FOR COMPRESSED EXPLOSIVE FLUID TRANSPORT/STORAGE SYSTEMS**
FERNSTEUERUNGSSYSTEM FÜR SYSTEME ZUM TRANSPORT UND ZUR LAGERUNG KOMPRIMIERTER EXPLOSIVER FLÜSSIGKEITEN
SYSTÈME DE COMMANDE À DISTANCE DE SYSTÈMES DE TRANSPORT/STOCKAGE DE FLUIDES EXPLOSIFS COMPRIMÉS

(30) Priority: 19.03.2021 IT 202100006659
(43) Date of publication of application: 24.01.2024
(73) Proprietor: PICCINI PAOLO S.p.A., 52037 Sansepolcro (AR) (IT)
(72) Inventor: CORBUCCI, Bruno, 52037 Sansepolcro (AR) (IT); TAGLIAFERRI, Erik, 52037 Sansepolcro (AR) (IT); PICCINI, Marco, 52037 Sansepolcro (AR) (IT)
(74) Representative: Luppi, Emanuele
(86) International application number: PCT/IB2022/052477
(87) International publication number: WO 2022/195546

(56) References cited:
- WO-A2-2009/083931
- CN-A- 106 228 332
- CN-U- 204 101 937
- US-A1- 2020 349 489
- SIMON ADRIAN BOGDAN ET AL: "Monitoring systems in explosive and potentially toxic environments for reducing risk factors", 2017 5TH INTERNATIONAL SYMPOSIUM ON ELECTRICAL AND ELECTRONICS ENGINEERING (ISEEE), IEEE, 20 October 2017 (2017-10-20), pages 1 - 5, XP033265145, DOI: 10.1109/ISEEE.2017.8170647

## Description

### Technical Field

The present invention relates to a remote control system for compressed explosive fluid transport/storage systems.

### Background Art

At the current state of the art, there are numerous solutions dedicated to the transport/storage of compressed explosive fluids, with particular reference to natural gas (methane, ethane, butane, etc.) which is used in many sectors, including electric energy generation, combustion for automotive, home, commercial or industrial heating, etc.. The main difficulty, as well as the most expensive item, in the use of natural gas is represented by the transport of the product from the extraction and refining sites to the place of use: natural gas, due to its low density, must in fact be compressed and cooled (CNG - Compressed Natural Gas), sometimes to the point of liquefaction (LNG - Liquefied Natural Gas). While a traditional solution is represented by the use of pipelines which allow direct connection over long distances, a set of intrinsic or formal limitations, such as e.g. the difficulty of crossing oceans and impervious areas, or the need to build facilities on the territory of other States (international pipelines) which could interrupt the flow for political reasons or burden the transit economically with taxes, makes this approach impractical in some circumstances. It is possible to use ships, called LNG carriers, to transport liquefied natural gas, which allow obviating the limitations of pipelines but generally have higher costs and safety concerns. Where demand is insufficient, in many cases, natural gas that is recovered during oil extraction is burned directly on site (flaring), since it cannot be sold at a profit.

An equally widespread solution is transport by road or railways (motor vehicles and/or trains) which - although limited to shorter distances - gives the transport greater flexibility and capillarity in reaching isolated areas, not served by methane pipelines or in emergency situations. Road transport is carried out using specialized vehicles commonly known as "tank trucks". The vehicle comprises a set of container elements possibly connected to each other by a collector pipe, referred to as a plant, and fixed to the vehicle in a stable manner: it is a fundamental tool to ensure continuous supplies of natural gas to companies or civil settlements not connected to the main network of methane pipelines and allows the realization of the so-called "virtual methane pipeline". The tank truck is also the main tool with which the continuity of the methane supply is guaranteed in case of emergencies (e.g. pipe breakage) or for scheduled maintenance by the natural gas transport and distribution companies. As previously mentioned, for transport on vehicles with tanks, the methane must be compressed and cooled by means of a process that raises the pressure up to 300 bars. In addition, while a semi-trailer for transporting goods is a means of transport most of the time, the tank truck performs its nature as a means of transport 5-10% of the time and that of fixed gas storage 90-95% of the time, remaining fixed in its storage function for days against a journey of a few hours.

It is therefore clear that the transport/storage part represents a fundamental link in the CNG distribution chain.

Increasingly large fleets of compressed explosive fluid transport/storage systems, with particular reference to compressed natural gas, require continuous monitoring by both suppliers and end customers, and this monitoring must necessarily take into account the peculiar characteristics of the transport/storage of compressed explosive fluid, especially regarding the risk of explosion, thus allowing to obtain in real time not only the position and the route - as in the common and widespread satellite remote detecting systems, used for purely economic and administrative reasons - but also and above all the state of the tanks, the value of pressure, temperature and average use. Access to this information, in real time, is both a technical advantage for the company and a drastic improvement for the safety of both the transport and the transporter, thus enabling the timely detection of any increase in the levels of explosion risk.

In pursuing the objective of monitoring in real time the characteristics inherent in the compressed explosive fluid transport/storage, there are two main obstacles: the need to install a network of sensors that does not impact on the transport/storage itself, especially in terms of safety, while allowing the collection of information with adequate accuracy and reliability characteristics, and the need to transfer such information in a controlled, safe and traceable manner.

The state of the art now makes it possible to employ elaborate computing systems, identified as Internet of Things (IoT) systems, which use highperformance and easy-to-access communication networks. It is also possible to exploit miniaturized sensors (IoT devices) with low power consumption to generate the data to be routed to the centralized control and monitoring systems. The difficulty remains in finding a way to adapt these technologies to the safety requirements arising from the level of explosion risk which is characteristic of the transport/storage systems of compressed explosive fluids, including compressed natural gas. This level of explosion risk derives from the need of positioning the sensors in areas with a high probability of the presence of an explosive atmosphere determined by the coexistence of volatile combustible compounds, such as e.g. natural gas and/or vapors of other combustible fluids, and oxidizing compounds, such as e.g. air. The risk classification can be traced back to the "zone with explosion hazard in category 0" described by the ATEX Directive 99/92/EC, while the related safety requirements can be described with reference to the ATEX Directive 2014/34/EU.

Although it is possible to find some patents in the international arena that, although partially, address the problem described, such as the Chinese patent CN107303976, which relates to a monitoring device for tank trucks, or the U.S. patent US20170159611, which proposes a control system for pressure tanks, it is clear that none of them fully fixes the critical issues identified so far.

Document WO 2009/083931 A2 discloses safely processing a (liquid or vapor-gas) fluid, via monitoring and decreasing explosiveness of vapor-gas species formed therefrom, or contained therein. Document US 2020/349489 A discloses an operational real-time monitoring and transporting method and system for compressed gaseous fuel distribution network.

### Description of the Invention

According to the present invention, a remote control system for compressed explosive fluid transport/storage systems is made which allows remote management and monitoring of transport/storage systems of compressed explosive fluids, including compressed natural gas, by means of IoT technology, and which effectively solves the aforementioned problems by exploiting the technological components with safety and explosion risk prevention characteristics useful for their use in areas characterized by the presence of an explosive atmosphere as described above.

According to the objectives of the invention, a managing and supervising system for the transport and storage of compressed explosive fluids is proposed which:
- allows speeding up, automating and optimizing all the typical phases of a virtual pipeline (loading, transport, storage and delivery), requiring to suitably equip only the means of transport and therefore making itself independent from any type of plant in which it operates;
- is able to share position and measured quantities data so that, by interfacing with suitably structured databases of the pick-up/loading points and of the delivery/unloading points of the virtual pipeline, it is able to autonomously identify the location and the activity carried out, as well as to set the appropriate operational and safety parameters;
- is a fully interconnected system which, in case of need or desire, is still able to ensure the performance of the activities thereof in full safety and efficiency even in isolation (stand-alone operation).

Another object of the present invention is to devise a remote control system for compressed explosive fluid transport/storage systems which allows the aforementioned drawbacks of the prior art to be overcome within a simple, rational, easy and effective to use as well as affordable solution.

Specifically, the transport/storage system comprises a set of container elements which may be interconnected by a collector pipe, referred to as a plant, and stably attached to the system itself.

The aforementioned objects are achieved by the present remote control system, which, in its most general embodiment, consists of three interconnected elements and operating in conjunction by means of any communication network:
- at least one main processor acting as a central server;
- at least one set of telemetry and control devices which can be installed on relevant transport/storage systems of explosive fluids, including compressed ones;
- at least one set of user interface devices.

The main function of the remote control system is to generate, store, transfer, process and make available a set of data representative of the transport/storage conditions of the fluid. These data may be advantageously used to monitor and optimize the transport/storage and distribution of compressed explosive fluids, including natural gas.

### Brief Description of the Drawings

Other characteristics and advantages of the present invention will become more apparent from the description of a preferred, but not exclusive, embodiment by means of the aid of the appended figures, in which:
- FIGURE 1 shows the architecture of a possible embodiment of the remote control system.
- FIGURE 2 shows the architecture of a possible embodiment of the remote control system.
- FIGURE 3 shows the telemetry and control device in its various components.
- FIGURE 4 shows the architecture of the user interface device.
- FIGURE 5 shows an example of the diagram of the user interface device with an interface screen presenting the selected vehicle, current location, information transmitted from telemetry.

### Embodiments of the Invention

With particular reference to these figures, reference numeral 1 globally indicates a remote control system for compressed explosive fluid transport/storage systems.

In the context of the present disclosure, the expression "transport/storage system" refers to a vehicle, of the type of a tank truck or the like, for the transport of explosive fluids, such as e.g. combustible, compressed and/or liquefied gases. In particular, the transport/storage system comprises a tractor unit and a fluid storage unit. The transport/storage system is employable for the transport of the fluid to refill additional storage tanks, to supply areas not served by the fixed national distribution network or in an emergency context.

In accordance with possible embodiments, the storage unit may be separable from the tractor and constitute a fixed temporary fluid storage device.

It cannot, however, be ruled out that the transport/storage systems may be of a different type, e.g. of the type of ships, freight trains or the like, or "sets of tanks" (self-supporting frames containing a certain number of tanks, movable with apparatuses such as cranes, forklift trucks, etc....).

Specifically, the transport/storage system, in the present case the storage unit, is provided with a plant comprising a set of container elements, of the tank type, possibly connected to each other by a collector pipe.

The remote control system 1 according to the invention comprises:
- one main processor 2;
- one or more telemetry and control devices 3 which may be installed on relevant transport/storage systems 5 of explosive fluids including compressed ones;
- one or more user interface devices 4;
operating in conjunction and interconnected with each other by means of a communication network 24.

The remote control system 1 employs a computer architecture of the Internet of Things (IoT) type, wherein the main processor 2 communicates with the devices 3, 4. The remote control system 1 is configured to generate, store, transfer, process and make usable a set of data representative of the fluid transport/storage conditions.

The above data can be used to monitor and optimize the transport/storage and the distribution of the fluid.

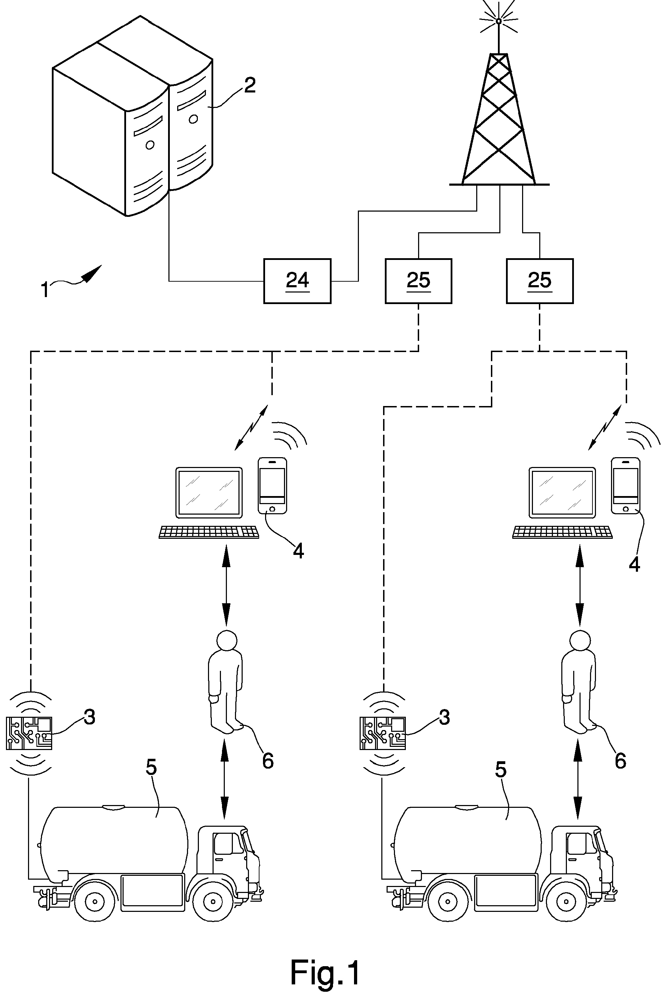

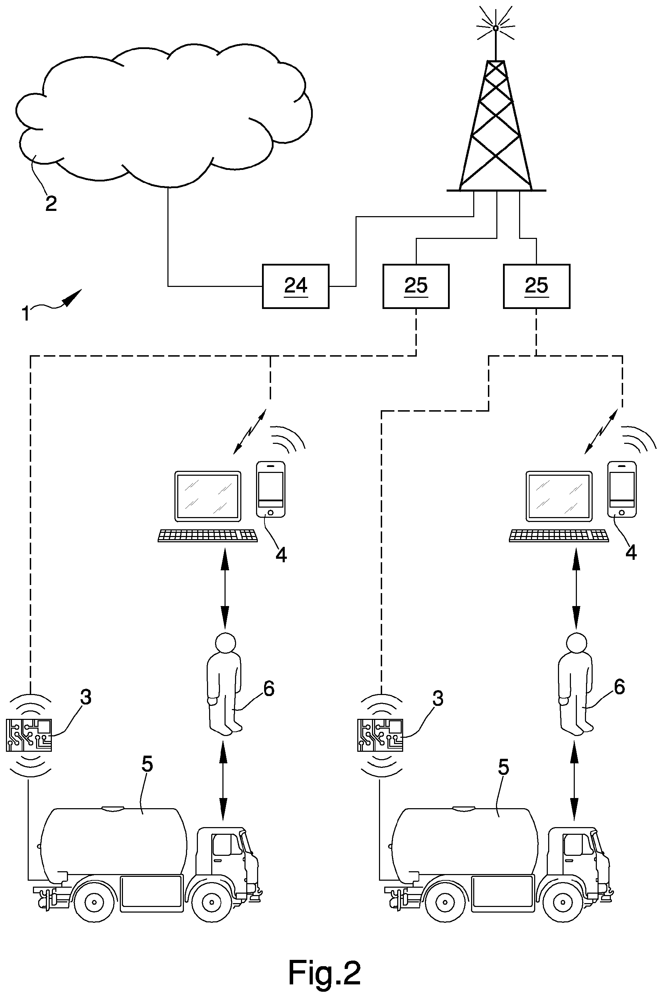

The main processor 2, having a server function, comprises at least one operating platform, either centralized (FIG.1) or distributed (FIG.2) according to a cloudcomputing architecture, configured to collect, process and distribute the data generated by the telemetry and control devices 3 and by the user interface devices 4.

The structure of the main processor 2 is such as to ensure suitable characteristics of sturdiness, reliability and performance. In addition, automatic data and software backup and recovery procedures are provided to ensure resilient characteristics to possible disruptions or catastrophic events.

The main processor 2 is configured to perform at least the following functions:
- sending and receiving data packages to and from the telemetry and control devices 3;
- sending and receiving data packages to and from the user interface devices 4;
- processing and long-term storage of raw data and processed data.

The main processor 2 is provided with communication peripherals having at least one interface module with the mobile radio network dedicated to the receiving and/or transmission of data.

In one embodiment, the main processor comprises a two-way communication infrastructure.

The main processor 2 comprises at least one application software configured to:
- manage the data streams from the telemetry and control devices 3;
- set the operating parameters of the telemetry and control devices 3 remotely;
- manage the data streams to and from the user interface devices 4;
- forward commands and instructions to one or more of said telemetry and control devices 3, after checking for the correctness thereof;
- process autonomously by means of the generation of performance indicators and the processing of statistics for each transport/storage system 5;
- manage alarms generated by the telemetry and control devices 3 according to arbitrarily selected indicators;
- profile users by means of uniquely identified credentials.

More in detail, the management of data streams to and from the telemetry and control devices 3 and/or the user interface devices 4 also comprises one or more of the following functions: receiving, forwarding, interpreting, processing, storing, verifying data soundness and verifying data lawfulness based on the user profiling.

Specifically, in accordance with a preferred embodiment, the software functions comprise at least the ability to discern between three subcategories of operator 6, depending on the access credentials.

The three subcategories are identified as:
- system administrator, with full access to software functionalities for maintenance and management purposes;
- qualified user, with permissions to enter and alter the data contained in the database sections for which they are responsible; they can modify some operating and alarm settings of the telecommunications systems to which they have access;
- standard user, with only the possibility of consulting - optionally limited - the databases of their own competence.

Usefully, the software is also configured to:
- manage and allow the populating of databases of the pick-up/loading points and of the delivery/unloading points with personal data and operational information which can be represented on appropriate interactive maps;
- uniquely correlate the GPS coordinates shared by the telemetry and control devices 3 to the databases so as to associate with each telemetry and control device 3 the activity carried out and the relevant progress status, as well as to independently set the operational and safety parameters considered appropriate for each activity.

The software functionalities also comprise at least:
- ability to receive, interpret, process and store the data provided by the telemetry and control devices 3;
- ability to make database data available on demand to the user interface devices 4;
- remotely modify the safety settings and communication credentials of the remote control system 1;
- forward instructions to the individual telemetry and control device 3 or to groups of telemetry and control devices 3, on the basis of commands and settings set by the user interface devices 4; the software also evaluates the correctness and congruence of the same;
- residual computational ability intended for the computing and saving of the performance indicators of each plant.

The software is also configured to manage alarms, with configuration of the levels for each plant, regarding indicators such as pressure, temperature, battery level and revision/document expiry dates. The activation of an alarm generates the sending of a specific communication, with configurable mode, such as e.g. SMS, email and/or instant messaging, to the interested user points.

The telemetry and control devices 3 advantageously constitute the distinctive component of the remote control system 1.

Advantageously, in fact, the telemetry and control devices 3 are each made as a stand-alone device independent of the relevant transport and storage system 5 and are configured to detect the aforementioned representative data.

In more detail, the telemetry and control devices 3 are configured to derive data which are essential to the operation of the entire transport/storage system 5.

In the preferred embodiment, the telemetry and control devices 3 are configured to communicate with and respond to the requests from the main processor 2 in an independent, automatic, traceable manner and using a connection-less type of communication 25. This type of communication does not require any particular expedient to the benefit of the simplicity of installation and operation. In one embodiment, the telemetry and control devices 3 use the exchange of data packages over a digital mobile radio network to communicate with the main processor 2.

Advantageously, the telemetry and control devices 3 are provided with a level of intrinsic safety compatible with the installation on transport/storage systems 5 of explosive fluids in areas with a maximum probability of presence of an explosive atmosphere, generated by the coexistence of volatile combustible compounds and oxidizing compounds.

An example of risk classification of such areas is given by the ATEX 99/92/EC standard for the zones with explosion hazard in category 0, to which correspond the safety requirements expressed by the ATEX 2014/34/EU standard. However, the levels of risk and the relevant safety requirements described by the aforementioned directives constitute the minimum technical limit for the use of said technologies in areas characterized by said levels of risk and do not limit, in any way, improved solutions in terms of safety.

Advantageously, such construction and installation characteristics are suitable for use of the telemetry and control devices 3 even in areas characterized by lower or no level of explosion risk and in transport/storage systems 5 of compressed non-explosive fluids.

The telemetry and control devices 3 comprise each at least one electronic board 9.

Each of the telemetry and control devices 3 also comprises at least:
- a plurality of transducer modules 14, 15 configured to detect the process parameters of the transport/storage of compressed explosive fluid, and comprising at least pressure transducers 14 and temperature transducers 15;
- at least one communication module 8 which can be interfaced with a mobile radio network comprising at least one chipset and one integrated antenna and adapted to communicate with the main processor 2 by means of sending coded messaging;
- at least one position detecting module 10 configured to acquire GPS coordinates;
- at least one power supply module 13 designed to supply power to the entire telemetry and control device 3 and provided with one or more removable/replaceable batteries.

In detail, the telemetry and control devices 3 are provided with a power supply which is independent from the transport/storage systems 5 in which they are installed and have local control and programming possibilities, so as to minimize the dependence of the telemetry and control device itself on failures of other components and to ensure the maximum reliability on the management of the various operations. In a preferred embodiment, the telemetry and control devices 3 are provided with a panel infrared input to allow for management and programming thereof.

In actual facts, the operational life of the telemetry and control devices 3 allows the control and management of the transport and storage system 5 even in case of a serious anomaly, such as a rollover or fire. It is, in fact, worth specifying that, as a rule, in such circumstances, all the electrical/electronic apparatuses must be isolated/disconnected in order to avoid the worsening of the anomaly that could also lead to explosions and risks for the surrounding areas.

The control system 1 according to the invention allows, therefore, these drawbacks to be overcome and to allow continuous monitoring in real time.

In the specific case of compressed gas transport, pressure is directly representative of the quantity of product transported and the variations thereof can also be interpreted as indicators of correct operation or not. Temperature is an interfering and modifier input for pressure, so knowing its value allows having more reliable estimates of the stored quantities; moreover, its increase above certain limits can be an indication of fire hazard; its decrease below certain values, determined in some cases by unsuitable "discharge flows" (leaks or operation beyond flow rate limits), can represent a critical issue for the safety of tanks and pipes (which have operating temperature ranges established by the manufacturer).

Suitably, the remote control system 1 may also comprise a plurality of sensors configured to detect the characteristic quantities of the compressed explosive fluid transport in order to ensure accuracy and redundancy of the transmitted data.

The communication module 8 is composed of a chipset and of an antenna integrated into the electronic board 9 and is intended to communicate with the server by exchanging data packages over a digital mobile radio network.

In accordance with a preferred embodiment, the position detecting module 10 comprises a GPS device and is provided with at least one chipset 11 and with at least one dedicated antenna 12, configured to uniquely identify and geo-locate the position of the transport/storage system 5.

Alternatively, the geo-location information may be derived by the identification of the mobile radio network repeaters with which the communication module 8 interacts. Thus, in such a case, the position detecting module 10 coincides with the communication module 8.

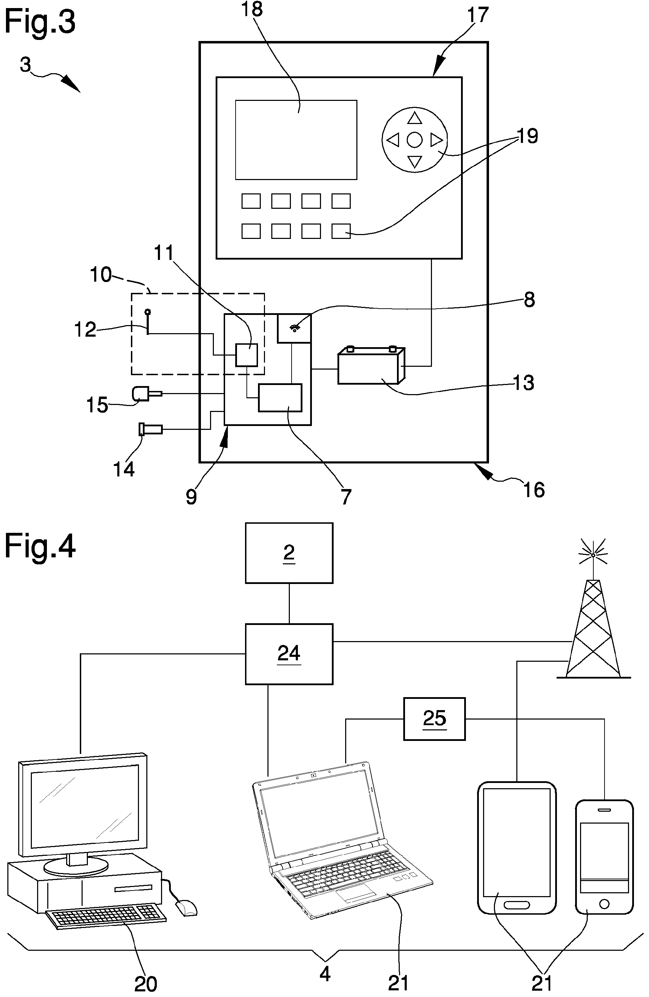

With reference to FIG. 3, moreover, each of the telemetry and control devices 3 comprises at least one microcontroller module 7 (MCU: Micro Controller Unit) configured to manage the program logic of the remote control system 1 and the interaction between the different parts composing the remote control system itself.

More in detail, the microcontroller module 7 is configured to manage the program logic of the telemetry and control devices 3.

The microcontroller module 7 comprises at least one analog input and at least one digital input for receiving data streams coming from the transducer modules 14, 15, from the communication module 8, from the power supply module 13 and from any further connected modules.

The analog input and the digital input are intended for monitoring signals coming from the transducers as well as voltage and current levels from the power supply module.

Conveniently, the microcontroller module 7 may also be provided with a digital output for controlling any actuator connected thereto. Specifically, the actuator may be of the type of a solenoid valve connected to the plant.

The microcontroller module 7 also comprises at least one bank of volatile memory and at least one mass storage device for managing process data and factory information intended for the proper operation of the remote control system 1.

Advantageously, one or more of the aforesaid modules 7, 8, 10, and 13 may be integrated into an individual physical module 16 which may comprise a local user interface 17 for the display and/or entering of data. The physical module 16 also accommodates the board 9.

The local user interface 17 is composed of a display 18 and by suitable input systems 19 in the form of a sealed keypad.

Usefully, part of said modules 7, 10, 13, 14, 15, 16 composing the telemetry and control devices 3 are arranged in areas of the transport/storage system 5 with a high probability of presence of an explosive atmosphere and physically connected to the remaining modules 7, 10, 13, 14, 15, 16 arranged in areas with lower probability of presence of an explosive atmosphere.

Each of the telemetry and control devices 3 comprises at least one management software stored in the mass storage device of the relevant microcontroller module 7 and configured to monitor a set of values generated by the elements composing the relevant telemetry and control device 3 as well as to safeguard and optimize the electrical consumption thereof.

More specifically, the values, having arbitrarily assigned accuracy, include:
- values of the physical quantities measured by the transducer modules 14, 15;
- state of charge of the power supply module 13;
- position of the relevant transport/storage system 5;
- data and indicators generated by the secondary processing of the microcontroller module 7.

The software shall therefore monitor and optionally store, in a temporary manner and in any case only until it is sent to the main processor, the values of the physical quantities measured by the transducers and by the battery charge meters, of the position information and any secondary processing product that may be generated by the microcontroller, such as e.g. the indication of movement/stationing and/or speed of the transport/storage system starting from the geo-location information. The measured or processed values will have arbitrarily assignable accuracy.

The main functionality of the software is to monitor the values of the physical quantities of pressure and temperature, as well as of the data provided by the geo-location module, such as time marker, latitude, longitude, aimed at the geo-location of the plant and, in addition, information on the state of battery charge.

The software acquisition and setting abilities allow monitoring any quantity of interest (not only temperature and pressure), provided that it has the telemetry and control device 3 of the relevant transducer.

In a preferred embodiment, the system calculates and communicates an estimate of the kilometers elapsed between two subsequent data sending operations to the server, using the value of the coordinates, to assess whether the plant is stationary or is moving.

Advantageously, the communication module 8 is configured to send the aforementioned values to the main processor 2 on the basis of one or more of:
- time limit preset by an operator 6 between two subsequent sending operations;
- exceeding of the preset threshold levels of the measured parameters;
- confirmation of receipt and/or execution of operations requested asynchronously by the main processor 2;
- change in the operational status of the monitored fluid transport/storage system;
- unexpected restarts following power outages;
- local sending command directly from the telemetry and control device 3.

Data is sent to the server by means of data package exchange on a digital mobile radio communication network 24.

All the thresholds and parameters of data transmission will be conveniently controllable and modifiable remotely by sending a control data package from the main processor. The transmission can be deactivated with a similar procedure.

Message sending time windows are limited. The definition of the message sending time intervals can be set remotely on a discretization scale defined by the time series 1-2-3-4-6-8-12-24.

In the preferred embodiment it is possible to choose the approximate time of sending the first message in order to set the detection communication at times compatible with their viewing and consequent processing of the information content. In the same way it is possible to set or disable remotely the alarm levels for the quantities of pressure and temperature. It is also possible to remotely set the frequency of local acquisition of the sensor data, which is also useful for alarm purposes.

In order to optimize battery life in line with the variable management needs, all data local acquisition, alarm thresholds and data transmission parameters can be automatically varied by the on-board system which, based on its geo-location, communicates it to the server and automatically receives the set parameters (e.g. based on the need to monitor the customer/unloading type or season) and implements an adaptive functional logic.

The communication with the server takes place through the sending and receiving of data packages on a digital mobile radio network: to avoid unwanted external interference, the remote control IoT system is able to recognize its interlocutor through the identification and coding of data packages, ignoring third party communications.

The telemetry and control device 3 uses connection-less communication, therefore, the main processor 2 is also configured to verify the value sending operations by means of a control and confirmation procedure of the reception of the messages/data packages. The control and confirmation procedure provides at least for the possibility of resending the message automatically in case of non-receipt.

The telemetry and control device 3 automatically sets up at least one additional attempt to send a data package, should the first attempt failed.

In the event of the lack of network, or other problems should prevent the exchange of information, the alarm of non-communication is managed, serverside, by providing visual prompts for the end user.

The lack or extreme degradation of the communication channel is managed by the main processor on the basis of the lack of communication. In one embodiment, the remote control IoT system alerts the user of the absent/degraded communication condition with audible or visual alerts directly on the user application device.

Conveniently, the telemetry and control device 3 is provided with a restart system configured to restart the telemetry and control device itself as a result of a power outage, with the event being reported to the main processor 2. This helps prevent any service interruptions due to power outages.

The system is provided with automatic restart after power loss with data sending to the server containing synthetic and significant information of the event.

In one embodiment, the telemetry and control devices 3 generate a data stream towards the main processor that includes time markers and log entries to enable tracking of each individual event/operation carried out.

In a preferred embodiment, the remote control system 1 ensured maximum operational life while addressing the problem of consumptions. Each of the telemetry and control devices 3, in fact, is configurable in at least two operating modes selected from the list comprising:
- full operational mode, wherein the microcontroller module 7, the position detecting module 10 and the communication module 8 are operating;
- startup stand-by mode, wherein the communication module 8 and the position detecting module 10 are turned off, while the microcontroller module 7 is in the minimum consumption condition;
- energy-saving operational mode, wherein the microcontroller module 7 is operating with monitoring and control functions of at least the transducer modules 14, 15 and the communication module 8 and the position detecting module 10 are turned off.

Specifically, in the full operational mode, by timing and synchronizing the switching on and off of the modules 7, 8 and 10 as needed, all required operations are carried out, thus minimizing the energy consumption. In this mode, the remote control IoT system is able to monitor the status and position of the system, send/receive notifications, information and commands from the server.

In the startup stand-by mode, the remote control system is in a timed hibernation state characterized by the lowest possible power consumption, waiting to carry out new operations.

In the energy-saving operational mode, upon the occurrence of particular conditions, such as e.g. thresholds being exceeded, alarms or timings, the telemetry and control device 3 switches to the full operational mode.

The user interface devices 4 conveniently represent the physical terminals by which any operator 6 accesses the data stored and processed by the main processor 2.

Usefully, the user interface devices 4 are configured to access the data stored and processed by the main processor 2 and/or by the telemetry and control devices 3.

The user interface devices 4 are also configured to send information requests and receive generic data streams comprising updates, notifications from the central system, alarms and status information on the telemetry and control devices 3 pertaining to the operator 6.

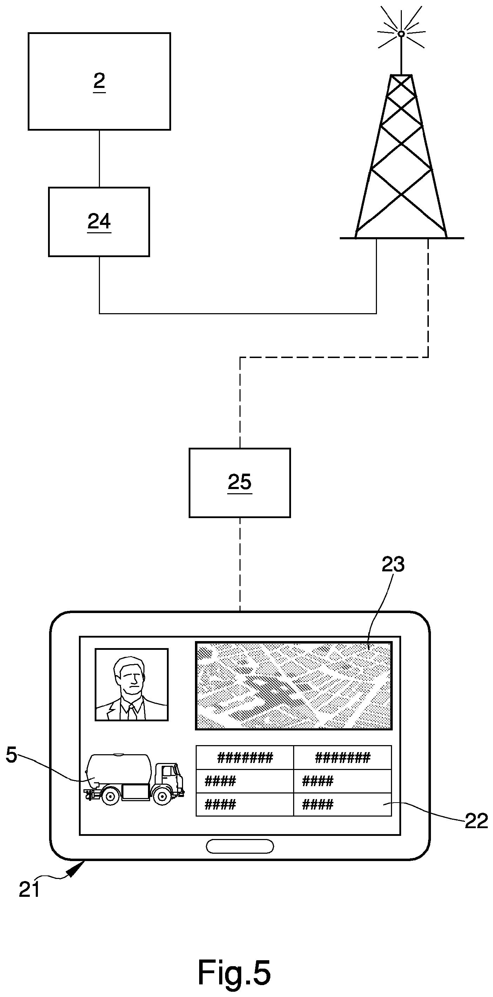

In the preferred embodiment, illustrated in FIGS. 4 and 5, the user interface devices 4 are configured like an adaptive and responsive website which, with certified credentials, allows access to and use of control and management functionalities of one or more systems provided with a remote control IoT system.

In more detail, the user interface devices 4 use a communication of the connection-oriented type by means of any network which allows establishing a data transfer by means of connection. In one embodiment, the devices use the Internet and TCP/IP stack network to establish virtual communication. Advantageously, the user interface devices 4 are configured to communicate, via digital network including proximity network, with the telemetry and control devices 3 for the direct access to the data managed locally by the microcontroller module 7. For this purpose, the user interface devices may be provided with connection modules on proximity or short-range connection-less communication network.

The user interface devices use, advantageously, an architecture of the client/server type aimed at the greatest simplification of the hardware needed by the operators to use their own user interface. The most complex part is then shifted to a remote main processor that acts as a content provider. In one embodiment, the user interface is configured like an adaptive and responsive website with controlled access on the basis of certified credentials which allows using the control and management functionalities of one or more plants provided with remote control IoT system. In such an embodiment the contents will be delivered in the form of HTML pages on HTTPS encrypted protocol. In one embodiment, the web server is advantageously located in the same infrastructure that hosts the main processor, in order to optimize the costs and efficiency of data interchange.

In any embodiment, each user interface device is provided with one application software which requires user authentication through credentials. The architecture of the data navigation page follows the common logic of classification and hierarchy of information and organizes the same into multilevel navigation menus with access rights according to the authenticated user profile.

The user interface devices 4 are configured to perform control of the accesses with user credentials in order to ensure the management of one or more transport/storage systems 5.

Usefully, the user interface devices 4 comprise smart-phones or tablets or any smart device capable of communicating, via the Internet network, with the main processor 2 for the recovery and display of the aforementioned data.

In such an embodiment, the hardware necessary for the operator 6 to interact and communicate may turn out to be any device, fixed 20 or mobile 21, provided with an Internet connection and a browser.

The user interface is organized according to nested structures in order to obtain an organic and intuitive distribution of information.

The indicators of the individual plants are such as to make the following information immediately visible to the operator, by means of graphic elements and letterings 22:
- plant identifier corresponding to the serial number of the plant itself or to an identification code of the transport/storage system;
- indication of the natural contact person for the plant;
- position 23 associated with the last available communication;
- indication of the status of use, indicating whether the plant is in use (stationary or in motion); whether it is undergoing maintenance, breakdown or being decommissioned;
- process parameters related to the plant pressure and/or temperature;
- indication of the battery state;
- notifications of warnings and/or alerts for the plant.

By selecting the graphical container of a specific plant, the operator 6 accesses the detailed data sheets containing more specific information and the consultation and management sections of the specific plant that allow:
- viewing plant-identifying information, including system ID, software version, hardware version and any administrative data;
- viewing the history of the loading/unloading operations of the plant, with a filter to select the time intervals of interest and/or the places of interest; checking the names of those assigned or responsible for the plant;
- viewing historical and real time trends of process data, both in graphical and tabular form. The data, thus made available, can be displayed in the time interval of interest and exportable in formats which can be viewed with commonly used software;
- viewing usage/efficiency indicators: incremental kilometers traveled (for mobile plants), number of unloading operations, average indication of the residual fluid level following an unloading operation, incremental value of the fluid transported;
- displaying the installed equipment, such as e.g. model and serial number of the components used.

The plant management section also provides the following functionalities:
- compilation, updating and modification of the transport/storage system schedule, including but not limited to maintenance deadlines, audit deadlines and document deadlines related to the selected plant;
- compilation, updating and modification of the on-board logbook, where all routine and special maintenance operations are recorded;
- display, setting and modification of the plant monitoring parameters, including but not limited to monitoring frequency and communication sending; in one embodiment, the system verifies *a priori* the feasibility of the requested modification, by comparing it, e.g., with the residual level of battery charge and the residual operational life expected in projection following the modification;
- selection, setting and modification of the alarm levels for the monitored quantities;
- compilation, updating and modification of the plant assignment and/or utilization program;
- display, setting and modification of the status of the plant, by selecting one out of several possible categories including but not limited to: "operational", "out of order", "under maintenance", "under decommissioning".

In the preferred embodiment, the functionalities described above are available to the end user who may or may not choose to modify the factory values according to their needs.

Conveniently, the user interface device 4 is configured to alert the operator 6 in the event of an anomaly in the relevant transport/storage system 5 and/or in the remote control system 1. The anomaly is detected by the telemetry devices 3 and/or by the main processor 2 as a result of post-processing of the data streams.

At the same time, the main processor 2 is configured to forward alarm or catastrophic event reports related to one or more of the transport and storage systems 5 and generated by the telemetry and control devices 3, to appropriate people in charge, via one of the communication interfaces available.

It has in practice been ascertained that the described invention achieves the intended objects.

It is also clear that modifications, additions or variations obvious to a person skilled in the art may be made to the invention described above without departing from the scope of protection provided by the appended claims.

## Claims

1. Remote control system (1) for compressed explosive fluid transport/storage systems, **characterized by** the fact that it comprises:
- at least one main processor (2) acting as a central server;
- at least one or more telemetry and control devices (3) which may be installed on relevant transport/storage systems (5) of explosive fluids including compressed ones; and
- one or more user interface devices (4);
operating in conjunction and interconnected to each other by means of a communication network (24), wherein said remote control system (1) employs a computer architecture of the Internet of Things (IoT) type, where said main processor (2) communicates with said devices (3, 4), said remote control system (1) being configured to generate, store, transfer, process and make usable a set of data representative of the transport/storage conditions of said fluid, wherein said data can be used to monitor and optimize the transport/storage and the distribution of said fluid;
where each of said telemetry and control devices (3) is made as a stand-alone device independent of the relevant transport and storage system (5) and is configured to detect said representative data and where said telemetry and control devices (3) are configured to communicate with and respond to the requests from the main processor (2) in an independent, automatic, traceable manner and using a connection-less type of communication (25).

2. Remote control system (1) according to claim 1, **characterized by** the fact that said main processor (2) comprises at least one operating platform, either centralized or distributed, configured to collect, process and distribute the data generated by said telemetry and control devices (3) and by said user interface devices (4), said main processor (2) being configured to perform at least the following functions:
- sending and receiving data packages to and from said telemetry and control devices (3);
- sending and receiving data packages to and from said user interface devices (4);
- processing and long-term storage of raw data and processed data.

3. Remote control system (1) according to one or more of the preceding claims, **characterized by** the fact that said main processor (2) comprises at least one application software configured to:
- manage the data streams from said telemetry and control devices (3);
- set the operating parameters of said telemetry and control devices (3) remotely;
- manage the data streams to and from said user interface devices (4);
- forward commands and instructions to one or more of said telemetry and control devices (3), after checking for the correctness thereof;
- process autonomously by means of the generation of performance indicators and the processing of statistics for each transport/storage system (5);
- manage alarms generated by said telemetry and control devices (3) according to arbitrarily selected indicators;
- profile users by means of uniquely identified credentials.

4. Remote control system (1) according to one or more of the preceding claims, **characterized by** the fact that said main processor (2) comprises at least one application software configured to:
- manage and allow the populating of databases of the pick-up/loading points and of the delivery/unloading points with personal data and operational information which can be represented on appropriate interactive maps;
- uniquely correlate the GPS coordinates shared by said telemetry and control devices (3) to said databases so as to associate with each telemetry and control device (3) the activity carried out and the relevant progress status, as well as to independently set the operational and safety parameters considered appropriate for each activity.

5. Remote control system (1) according to one or more of the preceding claims, **characterized by** the fact that said telemetry and control devices (3) are provided with a level of intrinsic safety compatible with the installation on the transport/storage systems (5) of explosive fluids in areas with a maximum probability of presence of an explosive atmosphere, generated by the coexistence of volatile combustible compounds and oxidizing compounds.

6. Remote control system (1) according to one or more of the preceding claims, **characterized by** the fact that each of said telemetry and control devices (3) comprises at least:
- a plurality of transducer modules (14, 15) configured to detect the process parameters of the transport/storage of compressed explosive fluid, and comprising at least pressure transducers (14) and temperature transducers (15);
- at least one communication module (8) which can be interfaced with a mobile radio network comprising at least one chipset and one integrated antenna and adapted to communicate with said main processor (2) by means of sending coded messaging;
- at least one position detecting module (10) configured to acquire the GPS coordinates;
- at least one power supply module (13) designed to supply power to the entire telemetry and control device (3) and provided with one or more removable/replaceable batteries.

7. Remote control system (1) according to one or more of the preceding claims, **characterized by** the fact that said position detecting module (10) comprises a GPS device and is provided with at least one chipset (11) and with at least one dedicated antenna (12), configured to uniquely identify and geo-locate the position of the transport/storage system (5).

8. Remote control system (1) according to one or more preceding claims, **characterized by** the fact that each of said telemetry and control devices (3) comprises at least one microcontroller module (7) configured to manage the program logic of said telemetry and control devices (3), said microcontroller module (7) being provided with:
- at least one analog input and at least one digital input for receiving data streams coming from said transducer modules (14, 15), from said communication module (8), from said power supply module (13) and from any further connected systems;
- at least one bank of volatile memory; and
- at least one mass storage device for managing process data and factory information intended for the proper operation of the remote control system (1).

9. Remote control system (1) according to one or more preceding claims, **characterized by** the fact that said microcontroller module (7) is provided with at least one digital output for controlling at least one actuator connected thereto.

10. Remote control system (1) according to one or more of the preceding claims, **characterized by** the fact that one or more of said modules (7, 8, 10, 13) may be integrated into an individual physical module (16) which may comprise a local user interface (17) for the display and/or entering of data.

11. Remote control system (1) according to one or more of the preceding claims, **characterized by** the fact that part of said modules (7, 10, 13, 14, 15, 16) composing the telemetry and control devices (3) are arranged in areas of said transport/storage system (5) with high probability of presence of an explosive atmosphere and physically connected to the remaining modules (7, 10, 13, 14, 15, 16) arranged in areas with lower probability of presence of an explosive atmosphere.

12. Remote control system (1) according to one or more of the preceding claims, **characterized by** the fact that said telemetry and control device (3) is provided with a restart system configured to restart said telemetry and control device itself as a result of a power outage, with the event being reported to said main processor (2).

13. Remote control system (1) according to one or more of the preceding claims, **characterized by** the fact that each of said telemetry and control devices (3) comprises at least one management software stored in the mass storage device of the relevant microcontroller module (7) and configured to monitor a set of values generated by the elements composing the relevant telemetry and control device (3) as well as to safeguard and optimize the electrical consumption thereof, said values, having arbitrarily assigned accuracy, include:
- values of the physical quantities measured by said transducer modules (14, 15);
- state of charge of said power supply module (13);
- position of the relevant transport/storage system (5);
- data and indicators generated by the secondary processing of said microcontroller module (7).

14. Remote control system (1) according to one or more of the preceding claims, **characterized by** the fact that said telemetry and control devices (3) are configured to generate a data stream towards said main processor (2) that includes time markers and log entries to enable tracking of each individual event/operation carried out.

15. Remote control system (1) according to one or more of the preceding claims, **characterized by** the fact that said communication module (8) is configured to send said values to said main processor (2) on the basis of one or more of:
- time limit preset by an operator (6) between two subsequent sending operations;
- exceeding of preset threshold levels of the measured parameters;
- confirmation of receipt and/or execution of operations requested asynchronously by said main processor (2);
- change in the operational status of the monitored fluid transport/storage system;
- unexpected restarts following power outages;
- local sending command directly from the telemetry and control device (3).

## Patentansprüche

1. Fernsteuerungssystem (1) für Transport-/Lagersysteme für verdichtete explosive Fluide, **dadurch gekennzeichnet, dass** es umfasst:
- mindestens einen Hauptprozessor (2), der als zentraler Server fungiert;
- mindestens eine oder mehrere Telemetrie- und Steuervorrichtungen (3), die an entsprechenden Transport-/Lagersystemen (5) für explosive Fluide, einschließlich verdichteter Fluide, installiert werden können; und
- ein oder mehrere Nutzerschnittstellenvorrichtungen (4);
die gemeinsam arbeiten und miteinander mittels eines Kommunikationsnetzwerks (24) verbunden sind, wobei das Fernsteuerungssystem (1) eine Computerarchitektur des Typs "Internet der Dinge" (IoT) verwendet, wobei der Hauptprozessor (2) mit den Vorrichtungen (3, 4) kommuniziert, wobei das Fernsteuerungssystem (1) dazu ausgebildet ist, einen Satz von Daten, die für die Transport-/Lagerbedingungen des Fluids repräsentativ sind, zu erzeugen, zu speichern, zu übertragen, zu verarbeiten und nutzbar zu machen, wobei die Daten dazu verwendet werden können, den Transport/die Lagerung und die Verteilung des Fluids zu überwachen und zu optimieren;
wobei jede der Telemetrie- und Steuervorrichtungen (3) als eigenständige Vorrichtung unabhängig von dem jeweiligen Transport-/Lagersystem (5) ausgebildet ist und dazu ausgebildet ist, die repräsentativen Daten zu erfassen, und wobei die Telemetrie- und Steuervorrichtungen (3) dazu ausgebildet sind, in einer unabhängigen, automatischen, nachvollziehbaren Weise und unter Verwendung einer verbindungslosen Art der Kommunikation (25) mit dem Hauptprozessor (2) zu kommunizieren und auf die Anforderungen von diesem zu antworten.

2. Fernsteuerungssystem (1) nach Anspruch 1, **dadurch gekennzeichnet, dass** der Hauptprozessor (2) mindestens eine zentralisierte oder verteilte Betriebsplattform umfasst, die dazu ausgebildet ist, die von den Telemetrie- und Steuervorrichtungen (3) und von den Nutzerschnittstellenvorrichtungen (4) erzeugten Daten zu sammeln, zu verarbeiten und zu verteilen, wobei der Hauptprozessor (2) dazu ausgebildet ist, mindestens die folgenden Funktionen auszuführen:
- Senden und Empfangen von Datenpaketen zu und von den Telemetrieund Steuervorrichtungen (3);
- Senden und Empfangen von Datenpaketen an die und von den Nutzerschnittstellenvorrichtungen (4);
- Verarbeitung und Langzeitspeicherung von Rohdaten und verarbeiteten Daten.

3. Fernsteuerungssystem (1) nach einem oder mehreren der vorhergehenden Ansprüche, **dadurch gekennzeichnet, dass** der Hauptprozessor (2) mindestens eine Anwendungssoftware umfasst, die für Folgendes ausgebildet ist:
- Verwaltung der Datenströme von den Telemetrie- und Steuervorrichtungen (3);
- Einstellung der Betriebsparameter der Telemetrie- und Steuervorrichtungen (3) aus der Ferne;
- Verwaltung der Datenströme zu und von den Nutzerschnittstellenvorrichtungen (4);
- Weiterleitung von Befehlen und Anweisungen an eine oder mehrere der Telemetrie- und Steuervorrichtungen (3), nachdem sie auf ihre Korrektheit überprüft wurden;
- selbständige Verarbeitung mittels der Erzeugung von Leistungsindikatoren und der Verarbeitung von Statistiken für jedes Transport-/Lagersystem (5);
- Verwaltung von Alarmen, die von den Telemetrie- und Steuervorrichtungen (3) erzeugt werden, in Abhängigkeit von willkürlich ausgewählten Indikatoren;
- Erstellung von Benutzerprofilen mit Hilfe von eindeutig identifizierten Zugangsdaten.

4. Fernsteuerungssystem (1) nach einem oder mehreren der vorhergehenden Ansprüche, **dadurch gekennzeichnet, dass** der Hauptprozessor (2) mindestens eine Anwendungssoftware umfasst, die für Folgendes ausgebildet ist:
- Verwaltung und Ermöglichung der Bestückung von Datenbanken der Abhol/Ladestellen und der Liefer-/Entladestellen mit personenbezogenen Daten und Betriebsinformationen, die auf geeigneten interaktiven Karten dargestellt werden können;
- eindeutige Korrelation der GPS-Koordinaten, die von den Telemetrie- und Steuervorrichtungen (3) geteilt werden, mit den Datenbanken, um jeder Telemetrie- und Steuervorrichtung (3) die durchgeführte Aktivität und den entsprechenden Fortschrittsstatus zuzuordnen sowie unabhängig die Betriebs- und Sicherheitsparameter einzustellen, die für jede Aktivität als angemessen angesehen werden.

5. Fernsteuerungssystem (1) nach einem oder mehreren der vorhergehenden Ansprüche, **dadurch gekennzeichnet, dass** die Telemetrie- und Steuervorrichtungen (3) mit einem Niveau an intrinsischer Sicherheit versehen sind, das mit der Installation auf den Transport-/Lagersystemen (5) von explosiven Fluiden in Bereichen mit einer maximalen Wahrscheinlichkeit des Vorhandenseins einer explosiven Atmosphäre kompatibel ist, die durch die Koexistenz von flüchtigen brennbaren Verbindungen und oxidierenden Verbindungen erzeugt wird.

6. Fernsteuerungssystem (1) nach einem oder mehreren der vorhergehenden Ansprüche, **dadurch gekennzeichnet, dass** jede der Telemetrie- und Steuervorrichtungen (3) mindestens umfasst:
- eine Mehrzahl von Wandlermodulen (14, 15), die so ausgebildet sind, dass sie die Prozessparameter des Transports/der Lagerung des verdichteten explosiven Fluids erfassen, und die zumindest Druckwandler (14) und Temperaturwandler (15) umfassen;
- mindestens ein Kommunikationsmodul (8), das mit einem Mobilfunknetz verbunden werden kann, das mindestens einen Chipsatz und eine integrierte Antenne umfasst und dazu ausgebildet ist, mit dem Hauptprozessor (2) durch das Senden kodierter Nachrichten zu kommunizieren;
- mindestens ein Modul zur Positionsbestimmung (10), das zur Erfassung der GPS-Koordinaten ausgebildet ist;
- mindestens ein Stromversorgungsmodul (13), das dazu bestimmt ist, die Telemetrie- und Steuervorrichtungen (3) mit Strom zu versorgen, und das mit einer oder mehreren herausnehmbaren/auswechselbaren Batterien ausgestattet ist.

7. Fernsteuerungssystem (1) nach einem oder mehreren der vorhergehenden Ansprüche, **dadurch gekennzeichnet, dass** das Modul zur Positionsbestimmung (10) eine GPS-Vorrichtung umfasst und mit mindestens einem Chipsatz (11) und mit mindestens einer dedizierten Antenne (12) ausgestattet ist, die dazu ausgebildet sind, die Position des Transport-/Lagersystems (5) eindeutig zu identifizieren und zu lokalisieren.

8. Fernsteuerungssystem (1) nach einem oder mehreren der vorhergehenden Ansprüche, **dadurch gekennzeichnet, dass** jede der Telemetrie- und Steuervorrichtungen (3) mindestens ein Mikrocontrollermodul (7) umfasst, das dazu ausgebildet ist, die Programmlogik der Telemetrie- und Steuervorrichtungen (3) zu verwalten, wobei das Mikrocontrollermodul (7) versehen ist mit:
- mindestens einem Analogeingang und mindestens einem Digitaleingang zum Empfang von Datenströmen, die von den Wandlermodulen (14, 15), vom Kommunikationsmodul (8), vom Stromversorgungsmodul (13) und von weiteren angeschlossenen Systemen stammen;
- mindestens einer Bank eines flüchtigen Speichers; und
- mindestens einer Massenspeicher-Vorrichtung zum Verwalten von Prozessdaten und Werksinformationen, die für den ordnungsgemäßen Betrieb des Fernsteuerungssystems (1) bestimmt sind.

9. Fernsteuerungssystem (1) nach einem oder mehreren der vorhergehenden Ansprüche, **dadurch gekennzeichnet, dass** das Mikrocontrollermodul (7) mit mindestens einem digitalen Ausgang zur Steuerung mindestens eines daran angeschlossenen Aktors versehen ist.

10. Fernsteuerungssystem (1) nach einem oder mehreren der vorhergehenden Ansprüche, **dadurch gekennzeichnet, dass** eines oder mehrere der Module (7, 8, 10, 13) in ein individuelles physisches Modul (16) integriert werden können, das eine lokale Benutzerschnittstelle (17) für die Anzeige und/oder Eingabe von Daten umfassen kann.

11. Fernsteuerungssystem (1) nach einem oder mehreren der vorhergehenden Ansprüche, **dadurch gekennzeichnet, dass** ein Teil der die Telemetrie- und Steuervorrichtungen (3) bildenden Module (7, 10, 13, 14, 15, 16) in Bereichen des Transport-/Lagersystems (5) mit hoher Wahrscheinlichkeit des Vorhandenseins einer explosiven Atmosphäre angeordnet und mit den übrigen Modulen (7, 10, 13, 14, 15, 16), die in Bereichen mit geringerer Wahrscheinlichkeit des Vorhandenseins einer explosiven Atmosphäre angeordnet sind, physikalisch verbunden sind.

12. Fernsteuerungssystem (1) nach einem oder mehreren der vorhergehenden Ansprüche, **dadurch gekennzeichnet, dass** die Telemetrie- und Steuervorrichtung (3) mit einem Wiederanlaufsystem versehen ist, das dazu ausgebildet ist, die Telemetrie- und Steuervorrichtung selbst als Folge eines Stromausfalls neu zu starten, wobei das Ereignis dem Hauptprozessor (2) gemeldet wird.

13. Fernsteuerungssystem (1) nach einem oder mehreren der vorhergehenden Ansprüche, **dadurch gekennzeichnet, dass** jede der Telemetrie- und Steuervorrichtungen (3) mindestens eine Verwaltungssoftware umfasst, die im Massenspeicher des betreffenden Mikrocontrollermoduls (7) gespeichert und dazu ausgebildet ist, einen Satz von Werten zu überwachen, die von den Elementen erzeugt werden, aus denen die betreffende Telemetrie- und Steuervorrichtung (3) besteht, sowie deren Stromverbrauch zu sichern und zu optimieren, wobei die Werte, die eine beliebig zugewiesene Genauigkeit aufweisen, umfassen:
- Werte der physikalischen Größen, die von den Wandlermodulen (14, 15) gemessen werden;
- den Ladezustand des Stromversorgungsmoduls (13);
- die Position des betreffenden Transport-/Lagersystems (5);
- Daten und Indikatoren, die von der Sekundärverarbeitung des Mikrocontrollermoduls (7) erzeugt werden.

14. Fernsteuerungssystem (1) nach einem oder mehreren der vorhergehenden Ansprüche, **dadurch gekennzeichnet, dass** die Telemetrie- und Steuervorrichtung (3) dazu ausgebildet ist, einen Datenstrom zum Hauptprozessor (2) zu erzeugen, der Zeitmarkierungen und Protokolleinträge enthält, um die Verfolgung jedes einzelnen Ereignisses/jeder einzelnen ausgeführten Operation zu ermöglichen.

15. Fernsteuerungssystem (1) nach einem oder mehreren der vorhergehenden Ansprüche, **dadurch gekennzeichnet, dass** das Kommunikationsmodul (8) dazu ausgebildet ist, die Werte an den Hauptprozessor (2) auf der Basis von einem oder mehreren der Folgenden zu senden:
- einem von einem Bediener (6) voreingestellten Zeitlimit zwischen zwei aufeinanderfolgenden Sendevorgängen;
- dem Überschreiten von voreingestellten Schwellenwerten der gemessenen Parameter;
- einer Bestätigung des Empfangs und/oder der Ausführung von Operationen, die von dem Hauptprozessor (2) asynchron angefordert wurden;
- einer Änderung des Betriebszustands des überwachten Transport-/Lagersystems für Flüssigkeiten:
- unerwarteter Wiederanläufe nach Stromausfällen;
- einem lokalen Sendebefehl direkt von der Telemetrie- und Steuervorrichtung (3).

## Revendications

1. - Système de commande à distance (1) de systèmes de transport/stockage de fluides explosifs comprimés, **caractérisé par le fait qu'**il comprend ;
- au moins un processeur principal (2) agissant en tant que serveur central ;
- au moins un ou plusieurs dispositifs de télémesure et de commande (3) qui peuvent être installés sur les systèmes de transport/stockage concernés (5) de fluides explosifs, comprenant ceux comprimés ; et
- un ou plusieurs dispositifs d'interface utilisateur (4) ;
fonctionnant conjointement et interconnectés entre eux au moyen d'un réseau de communication (24), ledit système de commande à distance (1) employant une architecture informatique du type Internet des Objets (IoT), où ledit processeur principal (2) communique avec lesdits dispositifs (3, 4), ledit système de commande à distance (1) étant configuré pour générer, stocker, transférer, traiter et rendre utilisable un ensemble de données représentatives des conditions de transport/stockage dudit fluide, lesdites données pouvant être utilisées pour surveiller et optimiser le transport/stockage et la distribution dudit fluide ;
où chacun desdits dispositifs de télémesure et de commande (3) est réalisé en tant que dispositif autonome indépendant du système de transport et de stockage concerné (5) et est configuré pour détecter lesdites données représentatives et où lesdits dispositifs de télémesure et de commande (3) sont configurés pour communiquer avec le processeur principal (2) et répondre aux requêtes provenant de celui-ci d'une manière indépendante, automatique, traçable, et à l'aide d'un type de communication « sans connexion » (25).

2. - Système de commande à distance (1) selon la revendication 1, **caractérisé par le fait que** ledit processeur principal (2) comprend au moins une plateforme d'exploitation, soit centralisée, soit distribuée, configurée pour collecter, traiter et distribuer les données générées par lesdits dispositifs de télémesure et de commande (3) et par lesdits dispositifs d'interface utilisateur (4), ledit processeur principal (2) étant configuré pour exécuter au moins les fonctions suivantes :
- envoi et réception de paquets de données auxdits et à partir desdits dispositifs de télémesure et de commande (3) ;
- envoi et réception de paquets de données auxdits et à partir desdits dispositifs d'interface utilisateur (4) ;
- traitement et stockage à long terme des données brutes et des données traitées.

3. - Système de commande à distance (1) selon une ou plusieurs des revendications précédentes, **caractérisé par le fait que** ledit processeur principal (2) comprend au moins un logiciel d'application configuré pour :
- gérer les flux de données provenant desdits dispositifs de télémesure et de commande (3) ;
- régler à distance les paramètres de fonctionnement desdits dispositifs de télémesure et de commande (3) ;
- gérer les flux de données vers lesdits et à partir desdits dispositifs d'interface utilisateur (4) ;
- transmettre des commandes et des instructions à un ou plusieurs desdits dispositifs de télémesure et de commande (3), après en avoir vérifié l'exactitude ;
- traiter de manière autonome au moyen de la génération d'indicateurs de performance et du traitement de statistiques pour chaque système de transport/stockage (5) ;
- gérer des alarmes générées par lesdits dispositifs de télémesure et de commande (3) conformément à des indicateurs sélectionnés de manière arbitraire ;
- faire le profil d'utilisateurs au moyen d'authentifiants identifiés de manière unique.

4. - Système de commande à distance (1) selon une ou plusieurs des revendications précédentes, **caractérisé par le fait que** ledit processeur principal (2) comprend au moins un logiciel d'application configuré pour :
- gérer et permettre le remplissage de bases de données des points d'enlèvement/chargement et des points de livraison/déchargement avec des données personnelles et des informations opérationnelles qui peuvent être représentées sur des cartes interactives appropriées ;
- corréler de manière unique les coordonnées GPS partagées par lesdits dispositifs de télémesure et de commande (3) auxdites bases de données afin d'associer à chaque dispositif de télémesure et de commande (3) l'activité effectuée et l'état d'avancement correspondant, ainsi que de définir de manière indépendante les paramètres opérationnels et de sécurité considérés comme appropriés pour chaque activité.

5. - Système de commande à distance (1) selon une ou plusieurs des revendications précédentes, **caractérisé par le fait que** les dispositifs de télémesure et de commande (3) sont dotés d'un niveau de sécurité intrinsèque compatible avec l'installation sur les systèmes de transport/stockage (5) de fluides explosifs dans des zones présentant une probabilité maximale de présence d'une atmosphère explosive, générée par la coexistence de composés combustibles volatils et de composés oxydants.

6. - Système de commande à distance (1) selon une ou plusieurs des revendications précédentes, **caractérisé par le fait que** chacun desdits dispositifs de télémesure et de commande (3) comprend au moins :
- une pluralité de modules transducteurs (14, 15) configurés pour détecter les paramètres du traitement du transport/stockage de fluide explosif comprimé, et comprenant au moins des transducteurs de pression (14) et des transducteurs de température (15) ;
- au moins un module de communication (8) qui peut être interfacé avec un réseau de radiocommunication mobile comprenant au moins un jeu de puces et une antenne intégrée et apte à communiquer avec ledit processeur principal (2) au moyen de l'envoi de messages codés ;
- au moins un module de détection de position (10) configuré pour acquérir les coordonnées GPS ;
- au moins un module d'alimentation électrique (13) destiné à alimenter en énergie électrique l'ensemble du dispositif de télémesure et de commande (3) et comportant une ou plusieurs batteries amovibles/remplaçables.

7. - Système de commande à distance (1) selon une ou plusieurs des revendications précédentes, **caractérisé par le fait que** ledit module de détection de position (10) comprend un dispositif GPS et comporte au moins un jeu de puces (11) et au moins une antenne dédiée (12), configurés pour identifier et géo-localiser de manière unique la position du système de transport/stockage (5).

8. - Système de commande à distance (1) selon une ou plusieurs des revendications précédentes, **caractérisé par le fait que** chacun desdits dispositifs de télémesure et de commande (3) comprend au moins un module microcontrôleur (7) configuré pour gérer la logique de programme desdits dispositifs de télémesure et de commande (3), ledit module microcontrôleur (7) comportant :
- au moins une entrée analogique et au moins une entrée numérique pour recevoir des flux de données provenant desdits modules transducteurs (14, 15), dudit module de communication (8), dudit module d'alimentation électrique (13) et de tous autres systèmes connectés ;
- au moins un bloc de mémoire volatile ; et
- au moins un dispositif de mémoire de masse pour la gestion de données de traitement et d'informations d'usine destinées au bon fonctionnement du système de commande à distance (1).

9. - Système de commande à distance (1) selon une ou plusieurs des revendications précédentes, **caractérisé par le fait que** ledit module microcontrôleur (7) comporte d'au moins une sortie numérique pour la commande d'au moins un actionneur qui lui est connecté.

10. - Système de commande à distance (1) selon une ou plusieurs des revendications précédentes, **caractérisé par le fait qu'**un ou plusieurs desdits modules (7, 8, 10, 13) peuvent être intégrés dans un module physique individuel (16) qui peut comporter une interface utilisateur locale (17) pour l'affichage et/ou la saisie de données.

11. - Système de commande à distance (1) selon une ou plusieurs des revendications précédentes, **caractérisé par le fait qu'**une partie desdits modules (7, 10, 13, 14, 15, 16) composant les dispositifs de télémesure et de commande (3) est disposée dans des zones dudit système de transport/stockage (5) à forte probabilité de présence d'une atmosphère explosive et physiquement connectée aux modules restants (7, 10, 13, 14, 15, 16) disposés dans des zones à plus faible probabilité de présence d'une atmosphère explosive.

12. - Système de commande à distance (1) selon une ou plusieurs des revendications précédentes, **caractérisé par le fait que** ledit dispositif de télémesure et de commande (3) comporte un système de redémarrage configuré pour redémarrer ledit dispositif de télémesure et de commande lui-même en conséquence d'une coupure de courant, l'événement étant rapporté audit processeur principal (2).

13. - Système de commande à distance (1) selon une ou plusieurs des revendications précédentes, **caractérisé par le fait que** chacun desdits dispositifs de télémesure et de commande (3) comprend au moins un logiciel de gestion stocké dans le dispositif de mémoire de masse du module microcontrôleur concerné (7) et configuré pour surveiller un ensemble de valeurs générées par les éléments composant le dispositif de télémesure et de commande concerné (3) ainsi que pour sauvegarder et optimiser la consommation électrique de ce dernier, lesdites valeurs, ayant une précision attribuée arbitrairement, comprenant:
- des valeurs des grandeurs physiques mesurées par lesdits modules transducteurs (14, 15) ;
- un état de charge dudit module d'alimentation électrique (13) ;
- une position du système de transport/stockage concerné (5) ;
- des données et indicateurs générés par le traitement secondaire dudit module microcontrôleur (7).

14. - Système de commande à distance (1) selon une ou plusieurs des revendications précédentes, **caractérisé par le fait que** lesdits dispositifs de télémesure et de commande (3) sont configurés pour générer un flux de données vers ledit processeur principal (2) qui comprend des repères de temps et des entrées de journal pour permettre un suivi de chaque événement/opération individuel(le) effectué(e).

15. - Système de commande à distance (1) selon une ou plusieurs des revendications précédentes, **caractérisé par le fait que** ledit module de communication (8) est configuré pour envoyer lesdites valeurs audit processeur principal (2) sur la base d'un ou plusieurs parmi :
- un délai prédéfini par un opérateur (6) entre deux opérations d'envoi suivantes ;
- un dépassement de niveaux de seuil prédéfinis des paramètres mesurés ;
- une confirmation de la réception et/ou de l'exécution d'opérations requises de manière asynchrone par ledit processeur principal (2) ;
- un changement dans l'état de fonctionnement du système de transport/stockage de fluides surveillé ;
- des redémarrages inattendus à la suite de coupures de courant ;
- un envoi local d'une commande directement à partir du dispositif de télémesure et de commande (3).
